Europäisches Patentamt

European Patent Office

Office européen des brevets

(11) Publication number: **0 552 587 A1**

# EUROPEAN PATENT APPLICATION

(21) Application number: **92830016.9**

(22) Date of filing: **17.01.92**

(51) Int. Cl.5: **H01M 4/92, B01J 23/89**

(43) Date of publication of application:
**28.07.93 Bulletin 93/30**

(84) Designated Contracting States:
**DE GB IT**

(71) Applicant: **Tanaka Kikinzoku Kogyo K.K.**
**No. 6-6, Nihonbashi-Kayabacho, 2-chome**
**Chuo-ku Tokyo(JP)**

(72) Inventor: **Stonehart, Paul**
**P.O. Box 1220, 56 Island Avenue**
**Madison, Connecticut 06443(US)**
Inventor: **Tsurumi, Kazunori, c/o TANAKA**
**KIKINZOKU KOGYO**
**TECHNICAL CENTER, No. 2-73, Shincho**
**Hiratsuka-shi, Kanagawa(US)**
Inventor: **Nakamura, Toshihide, c/o TANAKA**
**KIKINZOKU KOGYO**
**TECHNICAL CENTER, No. 2-73, Shincho**
**Hiratsuka-shi, Kanagawa(US)**
Inventor: **Sato, Akira, c/o TANAKA KIKINZOKU**
**KOGYO**
**TECHNICAL CENTER, No. 2-73, Shincho**
**Hiratsuka-shi, Kanagawa(US)**

(74) Representative: **Pellegri, Alberto et al**
**c/o Società Italiana Brevetti S.p.A. Via**
**Puccini, 7**
**I-21100 Varese (IT)**

(54) Platinum alloy catalyst and process of preparing same.

(57) A platinum alloy catalyst and a process of preparing the same are disclosed. The platinum alloy catalyst comprising a carbon support and (a) platinum, (b) manganese and (c) at least one of nickel and cobalt supported on the carbon support. The activity of this alloy catalyst is higher that that of conventional catalysts and possesses a longer life. The above process is characterized by use of an organic acid amine salt of manganese, nickel and/or cobalt. The alloying of these metals with the platinum can be carried out at a lower temperature so that the catalyst having a larger surface area can be obtained.

Background of the Invention

The present invention relates to a catalyst comprising a carbon support supported with platinum, manganese and one or more metals, especially a platinum alloy catalyst employed as an electrocatalyst of a fuel cell, and a process of preparing the same.

Catalysts comprising a carbon support and various catalyst metals, mainly platinum, supported thereon have heretofore been employed as those for various chemical reactions and for electrodes of fuel cells. A number of other catalysts which contain the other metals such as nickel and chromium in addition to the platinum have been known for promoting the catalyst performance.

However, the activity of these platinum containing catalysts for various reactions may be insufficient, and the appearance of catalysts having higher activity, more preferably a longer life, is desirably requested.

The present inventors have proposed a platinum-containing catalyst comprising a carbon support and catalyst metals supported thereon having a long life and relatively high catalytic activity, the catalyst metals being carburized (US patent No. 4,985,386, European Patent Publication No.329626). Since the supported catalyst metals are strongly adsorbed on the support by means of carburizing, the catalyst possesses an advantage that the reduction of the surface area, that is, the reduction of the activity seldom occurs due to agglomeration of the catalyst metal particles which is caused by weakening of the bonding between the catalyst metal particles and the support followed by its movement when the catalyst is employed in a high temperature reaction, so that the catalyst may be maintained at relatively high activity for a long period of time.

Contrary to the long life, the catalytic activity per unit cost of this catalyst is not necessarily satisfactory because an excessive amount of an expensive metal such as platinum should be employed for preventing the reduction of the effective surface area functioning as a catalyst which may be caused by the partial covering of each metal with carbon during the carburizing of the catalyst metal. For elevating the activity, the selection of supported metals, the combination thereof and the attainment of high dispersion of the catalyst metals have been heretofore attempted.

Summary of Invention

An object of the present invention is to provide a platinum alloy catalyst by selecting a combination of new catalyst metals.

Another object of the invention is to provide a platinum alloy catalyst having sufficiently high catalytic activity.

A further object of the invention is to provide a process of preparing the said catalyst having the highly dispersed catalytic metals.

In accordance with one aspect of the invention, there is provided a platinum alloy catalyst comprising a carbon support and (a) platinum, (b) manganese and (c) at least one of nickel and cobalt supported on the carbon support.

In another aspect of the invention, there is provided a process of preparing a platinum alloy catalyst which comprises impregnating a carbon support with a solution of a platinum-containing ion, depositing the platinum on the carbon support by reducing the platinum-containing ion by means of a reductant, applying a solution of an organic acid amine salt of manganese, and of at least one of nickel and cobalt to the carbon support, and alloying the these metals with the platinum on the carbon support.

The most characteristic feature of the invention is the addition of the manganese to the catalyst metals such as the platinum, thereby elevating the specific activity of the catalyst.

By adding a second metal to a conventional platinum catalyst supporting only the platinum and alloying the metal, the activity of the said platinum catalyst can be elevated, and the appropriate selection of the second metal to be added enables the remarkable activity elevation. Moreover, the addition of a third metal usually results in the further activity elevation.

Although manganese has been heretofore attached little importance as this addition metal, the present inventors have found that by adding the manganese to a carbon support supporting platinum and at least one of nickel and cobalt, a platinum alloy catalyst having higher activity than that of conventional catalysts can be provided, to reach the present invention.

The said platinum alloy catalyst possesses higher activity than that of a binary catalyst containing platinum and manganese and of a platinum-nickel-cobalt catalyst having relatively high activity among the conventional platinum alloy catalysts. The catalyst is especially useful as an electrocatalyst of a fuel cell, and this effect is most remarkable in a certain range of the supported metals.

According to the above process, a platinum alloy catalyst having higher activity than that of a binary catalyst containing platinum and manganese and of a platinum-nickel-cobalt catalyst having relatively high activity among the conventional platinum alloy catalysts can be obtained. Since, further, an organic acid amine salt of the manganese and the like is employed, the alloying of the manganese or the like and the platinum already supported on the carbon support can be conducted at a relatively low temperature so that the agglomeration of the supported metals can be depressed to produce an alloy catalyst having a high surface area. The organic acid amine employed in the invention is preferably a formic acid amine and an acetic acid amine because of their ease of acquisition.

When a thiosulfate and/or a metabisulfite having a weak reducing power and a sulfur atom is employed as a reductant for reducing a platinum containing ion, the particle size of a metal deposited on the carbon support is reduced and is made uniform compared with that obtained by mean of such a strong reductant as sodium borohydride. This tendency is made clearer based on the formation of a nuclei for growing which seems to be produced from a sulfur atom liberated in the reduction process. Since the catalyst metals supported on the carbon support produced can get in contact with a reactant at a high surface area, its specific catalyst activity is made higher and the catalyst metals can be effectively utilized. Since, further, the reducing power of the reductant is small, fine crystals can be grown having less crystal deficiencies so that the resulting catalyst possesses high resistance against the particle growth of the catalyst metal and its life can be significantly extended.

Detailed Description of Invention

Carbon is employed as a catalyst support in the present invention. The carbon includes a simple substance having any form of which a main component is carbon such as carbon black, graphite and active carbon. Preferably, the carbon support is porous and possesses a large surface area, for instance, about 30 to 2000 $m^2/g$, and possesses a particle size of 100 to 5000 Å. Such carbon as acetylene black (trade name: Shawinigan Acetylene Black, Denka Black or the like), electroconductive carbon black (trade name: Vulcan XC-72 or the like) and graphitized carbon black may be employed.

It is supposed that the rear surface of the catalyst metal facing the support which does not directly take part in a reaction strongly combines with the carbon support by means of a similar action to carburizing in a high temperature atmosphere of an alloying process hereafter described, to suppress the agglomeration.

In the process of this invention, a platinum metal is initially made to be supported onto the carbon support. The supporting of the platinum metal can be carried out according to any conventional method. One of the conventional methods comprises impregnating the solution of a platinum containing ion, for example, an aqueous solution of chloroplatinic acid into the carbon support, reducing the platinum containing ion and depositing the reduced platinum metal onto the carbon support. If, however, a strong reductant is employed in these reactions for reduction, the size of platinum particles increases so that the surface area of the particles per unit weight considerably decreases. For this reason, such a weak reductant as sodium thiosulfate ($Na_2S_2O_3 \cdot 5H_2O$) and potassium thiosulfate is preferably employed to depress the decrease of the surface area of the platinum. The said sodium and potassium thiosulfates react with the platinum containing ion, that is, the chloroplatinic ion to form finely divided metal sol having a large surface area.

It seems that, in this reaction employing the sodium thiosulfate, much finely divided sulfur sol may be formed by decomposition of a sulfur compound according to the following equation, which is known to occur in an acidic solution.

$$S^{2-} + 2H^+ \rightarrow H_2S_2O_3 \rightarrow S + H_2SO_3$$

The sulfur particles thus obtained serve as nuclei for growing much finely divided metal catalyst particles. Accordingly, it is preferable to slowly add, that is, add dropwise the initial several milliliters of the solution of the sodium thiosulfate and then add the rest of the solution all at once for assuredly forming the nuclei for growing.

With progress of the reaction, the solution turns from yellow to orange, and with the further growth of the fine metal crystals for several hours, the solution gradually becomes darker. Light passing through the solution exhibits the Tyndall effect showing the existence of colloidal particles.

This sol is then adsorbed onto the carbon support to provide the carbon support supported with the platinum through appropriate procedures such as drying.

In other words, when the said solution becomes nearly opaque, the carbon support is added into the solution and then the liquid phase of the formed slurry is forced to penetrate into the pores of the carbon support by means of agitation employing, for example, a supersonic wave agitator. The thicker slurry is formed by this procedure, which remains suspended and seldom precipitates. Drying of this slurry e.g. at 75 to 80 °C for 1 to 3 days for removing water provides dried powders containing the salt of a reaction by-product. The by-product may be dissolved and removed by extracting the dried powders several times with, for instance, 100 to 200 ml of distilled water. In the case of the graphitized carbon black support, the said slurry precipitates can be separated from the aqueous phase by discharging the aqueous phase. After the procedure is repeated several times, the catalyst may be dried overnight at about 110 °C.

The catalyst thus obtained has a large surface area. For example, according to the process, an aqueous solution of 1 g/100 ml of chloroplatinic acid is reacted with an aqueous solution of 3 g/75 ml sodium thiosulfate (penta hydrate salt) to produce a catalyst supported with platinum having the uniform particle size of which a specific surface area is about 148 $m^2$/g.

In place of the above procedures, a slurrying-filtration-washing process can be utilized. This process can be used in case of acetylene black or the like which does not easily precipitate.

Since the thermodynamic driving force of the reaction between the chloroplatinic acid and the thiosulfate ion is smaller than that of the conventional art and fine crystal particles with lesser defects may be produced, the catalyst particles produced in this process are considered to have larger durability against a sintering reaction in which the surface area of platinum decreases with time. The fine particles having a uniform particle size not more than 20 Å can be obtained by the above mentioned reaction between the thiosulfate and the chloroplatinic acid.

The relatively weak reductant which may be employed in this invention includes sodium metabisulfite ($Na_2S_2O_5$) and the like other than the above described sodium thiosulfite.

Although the process of reducing the platinum prior to the impregnation of the platinum containing solution into the carbon support has been described in detail, the platinum containing ion, contrary to the above process, may be reduced after the impregnation and thereby the high dispersion of the catalyst particles can be also obtained.

Then, other metals than the platinum, that is, manganese and at least one of cobalt and nickel are supported onto the carbon support having been supported with the platinum and are alloyed by heating the platinum and the other metals. However, it is not preferable to employ an ordinary alloying method for alloying them because the produced alloy agglomerates to decrease the surface area at a high temperature. For this reason, in the process of the present invention, ammonium hydroxide or the like is initially added to the warm aqueous solution of an organic acid salt preferably a formate or an acetate of such metals to be added to the platinum as manganese, nickel and cobalt to convert the acid salt into the corresponding metal salt of the organic acid amine preferably the metal salts of formic acid amine or acetic acid amine.

When an ordinary metal salt (e.g. nitrate) is heat-treated in a conventional process, high temperature reduction is necessary to alloy platinum with a fire-resistant oxide formed by the heat treatment so that the crystal growth (decrease of surface area) may occur prior to the alloying of the platinum. On the other hand, by the procedure of this invention, the metal salt can easily be reduced at a relatively low temperature with the minimum decrease of the surface area.

After, if necessary, impure metals in the metal salts are removed by extraction and dried, the metal salts are reduced in hydrogen, for example, at 250 °C for 30 minutes and then the metals are alloyed at an elevated temperature e.g. 700 °C.

In case of preparing the ternary catalyst containing the platinum, the amount of the metal salts of the organic acid amines is so adjusted that 90 to 40 atomic percent of the platinum and each of 5 to 30 atomic percent of the second and third metals, most preferably 50 atomic percent of the platinum and each 25 atomic percent of the second and third metals are contained in the catalyst.

The catalyst according to the present invention may be prepared not only by the above preparing process in which the platinum is supported before the other metals are supported but also by the process in which the platinum is supported after the other metals are supported.

## Examples

The present invention will now be described in detail in connection with the following Examples. However, these Examples are not intended to limit the scope of the present invention.

## Example 1

Chloroplatinic acid containing 1.12 g of platinum was dissolved in 300 ml of water in a vessel of a which a volume was 0.5 liter. 10 ml out of 75 ml of a solution in which 3 g of $Na_2S_2O_3 \cdot 5H_2O$ was dissolved was

4

added dropwise into the above solution for 3 minutes and the rest of 65 ml was added all at once, and the solution was stirred at 27 °C. With the lapse of time, the mixed solution became from yellow to orange, further to dark orange.

After the lapse of about 3 hours, the room was darkened and the light of an electric bulb was applied to the vessel, then the scatter of the was observed. On the other hand, 10 g of Acetylene Black to be employed as a catalyst support was suspended in 100 ml of pure water to prepare a well suspended slurry which was then added to the above mixed solution. The solution was stirred for 2 minutes with a supersonic agitator so that the mixed solution was forced to penetrate into the pores of the support. The slurry was kept to be suspended and did not precipitate during the stirring operation.

The slurry was dried in an oven at 75 to 80 °C overnight for removing water. The dry powders thus obtained were washed three times with about 200 ml of distilled water so that the by-products were extracted and removed. This slurry was further dried overnight at 70 °C to obtain the carbon support supported with the platinum.

The average platinum size of the platinum-carbon catalyst thus obtained was 18Å by X-ray diffraction, and the platinum particles were observed using a transmission electron microscope to have a nearly uniform particle size. The specific surface area was 155 $m^2/g$ and the amount of the supported platinum was 10 percent in weight according to an electrochemical hydrogen adsorption-desorption method.

To a mixed solution of 50 ml of a manganese acetate aqueous solution (0.77 mmol) and of 50 ml of a cobalt acetate aqueous solution (0.77 mmol) was added an ammonium hydroxide aqueous solution until the pH of the solution reached 10, and the solution was stirred for 5 minutes. To the mixed solution of the manganese salt of the acetate amine and of the cobalt salt of the acetate amine was added 3 g of the above carbon support catalyst supported with only the platinum, and the solution was stirred for 10 minutes.

After the slurry was dried and the manganese salt and the cobalt salt were reduced to manganese and cobalt, respectively, by reducing the slurry in a hydrogen flow, the temperature of the atmosphere of the catalyst was raised to 900 °C so that the platinum, the manganese and the cobalt were alloyed with each other.

About 3.1 g of the platinum-manganese-cobalt alloy catalyst was obtained. The supported amount of the platinum, of the manganese and of the cobalt were found to be 0.1g/g-catalyst, 0.014g/g-catalyst and 0.014g/g-catalyst (platinum: 50 atomic percent, manganese: 25 atomic percent and nickel: 25 atomic percent), respectively.

The particle size of the platinum-manganese-cobalt alloy catalyst thus obtained was measured to be 34 Å.

After this platinum-manganese-cobalt alloy catalyst was incorporated in a half cell as a cathode of which an electrolyte was 100 percent hot phosphoric acid at a rate of 0.5 $mg/cm^2$ of platinum, its activity at 1atm., 190 °C and 900 mV of oxygen electrode was measured to be 52 mA/mg-Pt.

Example 2

A platinum-manganese-nickel alloy catalyst was prepared in the same conditions as those of Example 1 except that a mixed solution of 50 ml of a manganese acetate aqueous solution (0.77 mmol) and of 50 ml of a nickel formate aqueous solution (0.77 mmol) was employed in place of the mixed solution of the manganese acetate and cobalt acetate of Example 1. The alloy particle size of this catalyst was 34 Å.

The supported amounts of the platinum, of the manganese and of the cobalt were found to be 0.1g/g-catalyst, 0.014g/g-catalyst and 0.014g/g-catalyst (platinum: 50 atomic percent, manganese: 25 atomic percent and nickel: 25 atomic percent).

After this catalyst was incorporated in a half fuel cell as a cathode of which an electrolyte was 100 percent hot phosphoric acid at a rate of 0.5 $mg/cm^2$ of platinum similarly to Example 1, its activity at 1atm., 190 °C and 900 mV of oxygen electrode was measured to be 53 mA/mg-Pt.

Example 3

A platinum-nickel-cobalt alloy catalyst was prepared in the same conditions as those of Example 1 except that a mixed aqueous solution of a nickel salt of formic acid amine, a cobalt salt of acetic acid amine and a manganese salt of acetic acid amine was prepared from a mixed solution of 35 ml of a nickel formate aqueous solution (0.65 mmol), of 35 ml of a cobalt acetate aqueous solution (0.65 mmol) and of 35 ml of a manganese acetate aqueous solution (0.25 mmol) in place of the mixed solution of the manganese acetate and cobalt acetate of Example 1 to obtain about 3.1 g of the said catalyst. The alloy particle size of this catalyst was 33 Å.

The supported amounts of the platinum, of the nickel, of the cobalt and of the manganese were found to be 0.1g/g-catalyst, 0.013g/g-catalyst, 0.013g/g-catalyst and 0.005g/g-catalyst (platinum: 50 atomic percent, nickel: 21 atomic percent, cobalt: 21 atomic percent and manganese: 8 atomic percent).

After this catalyst was incorporated in a half fuel cell as a cathode of which an electrolyte was 100 percent hot phosphoric acid at a rate of 0.5 mg/cm$^2$ of platinum similarly to Example 1, its activity at 1atm., 190 °C and 900 mV of oxygen electrode was measured to be 58 mA/mg-Pt.

Example 4

An alloy catalyst was prepared in the same conditions as those of Example 1 except that the molar volumes of the nickel formate, the cobalt acetate and the manganese acetate were 0.69 mmol, 0.76mmol and 0.15 mmol, respectively. The alloy particle size of this catalyst was 35 Å.

The respective atomic percents of each metal of the catalyst obtained were 50 atomic percent of platinum, 22.5 atomic percent of nickel, 22.5 atomic percent of cobalt and 5 atomic percent of manganese.

After this catalyst was incorporated in a half fuel cell as a cathode of which an electrolyte was 100 percent hot phosphoric acid at a rate of 0.5 mg/cm$^2$ of platinum similarly to Example 1, its activity at 1atm., 190 °C and 900 mV of oxygen electrode was measured to be 54 mA/mg-Pt.

Comparative Example 1

To 100 ml of an aqueous solution of manganese acetate (1.74 mmol) was added an ammonium hydroxide aqueous solution until the pH of the solution reached 10, and the solution was stirred for 5 minutes. To the aqueous solution of the manganese salt of the acetate amine was added 3 g of the platinum carbon support catalyst prepared in Example 1, and the solution was stirred for 10 minutes.

After the slurry obtained was dried at 65 °C by evaporation and the manganese salt was reduced to manganese by reducing the slurry in a 10 percent hydrogen flow (remainder: nitrogen) at a rate of 1 liter/minute at 250 °C for 30 minutes, the temperature of the atmosphere of the catalyst was raised to 900 °C so that the platinum and the manganese were alloyed with each other (the average particle size of the alloy was 24 Å).

About 3.1 g of the platinum-manganese alloy catalyst was obtained after discharge from the vessel. The supported amounts of the platinum and the manganese of the platinum-manganese alloy catalyst were found to be, employing a chemical analysis method, 0.1g/g-catalyst and 0.03g/g-catalyst (platinum: 50 atomic percent and manganese: 50 atomic percent), respectively. The alloy particle size of the catalyst was found to be 24 Å.

The said platinum-manganese alloy catalyst and the dispersion liquid of tetrafluoroethylene were mixed in a weight ratio of this platinum-manganese alloy catalyst to the tetrafluoroethylene being 6 : 4. This mixture was applied to a carbon sheet which had been hydrophobically treated, and the sheet was baked to prepare an electrode having 0.5 mg/cm$^2$ of platinum. After this electrode was incorporated in a half fuel cell as a cathode of which an electrolyte was 100 percent hot phosphoric acid at a rate of 0.5 mg/cm$^2$ of platinum similarly to Example 1, its activity at 1atm., 190 °C and 900 mV of oxygen electrode was measured to be 42 mA/mg-Pt.

Comparative Examples 2 and 3

Two platinum alloy catalysts were prepared each comprising platinum and respective other two metals similarly to Example 1 employing (i) a nickel formate aqueous solution (50 ml) and an ferrous acetate aqueous solution (50 ml) (Comparative Example 2) and (ii) a ferrous acetate aqueous solution (50 ml) and a cobalt acetate aqueous solution (50 ml) (Comparative Example 3), respectively, in place of the manganese acetate and the cobalt manganese of Example 1.

The respective atomic percents of each metal of the catalyst obtained were 50 atomic percent of platinum, 25 atomic percent of nickel and 25 atomic percent of iron (Comparative Example 2) and were 50 atomic percent of platinum, 25 atomic percent of cobalt and 25 atomic percent of iron (Comparative Example 3). After the both alloy catalysts were incorporated in a half fuel cell as a cathode of which an electrolyte was 100 percent hot phosphoric acid at a rate of 0.5 mg/cm$^2$ of platinum similarly to Example 1, their activities at 1atm., 190 °C and 900 mV of oxygen electrode were 48 mA/mg-Pt for the platinum-nickel-iron alloy catalyst of Comparative Example 2 and 45 mA/mg-Pt for the platinum-cobalt-iron alloy catalyst of Comparative Example 3.

Comparative Examples 4 and 5

A platinum-nickel-cobalt alloy catalyst was prepared similarly to Comparative Example 2, and the activity was measured to be 50 mA/mg-Pt. Similarly, the activity of the platinum catalyst before the supporting of the manganese and the cobalt prepared in Example 1 was measured to be 30 mA/mg-Pt.

TABLE 1

| | | Supported Metal | Atomic Percent | Activity (mA/mg-Pt) |
|---|---|---|---|---|
| E | 1 | Pt-Co-Mn | 50:25:25 | 52 |
| X | 2 | Pt-Ni-Mn | 50:25:25 | 53 |
| M | 3 | Pt-Ni-Co-Mn | 50:21:21:8 | 58 |
| P | 4 | Pt-Ni-Co-Mn | 50:22.5:22.5:5 | 54 |
| C E | 1 | Pt-Mn | 50:50 | 42 |
| O X | 2 | Pt-Ni-Fe | 50:25:25 | 48 |
| M M | 3 | Pt-Co-Fe | 50:25:25 | 45 |
| P P | 4 | Pt-Ni-Co | 50:25:25 | 50 |
| | 5 | Pt | —— | 30 |

The alloy catalysts, the atomic percent of the respective constituent metals of the platinum alloy catalysts and the activity at 0.9 V (mA/mg-Pt) were summarized in Table 1.

It is evident that, according to Table 1, the activities of the alloy catalysts of the Examples of the present invention consisting of the platinum and manganese, and at least of one of the nickel and cobalt are higher than those of the platinum-manganese alloy catalyst and the other catalyst without the manganese, for example, higher than that of the catalyst containing only the platinum by not less than 20 mA/mg-Pt, higher than that of the platinum-manganese catalyst by not less than 10 mA/mg-Pt and higher than that of the ternary catalyst containing the platinum by several mA/mg-Pt. Especially, it is evident that the activity of the platinum-nickel-cobalt-manganese alloy catalyst is higher than those of the other Examples.

Comparative Example 6

After the carbon support supporting the platinum-nickel-manganese alloy prepared in Example 1 was put into a vessel for carburizing, the mixture of nitrogen and methane (1 : 1) was supplied in the vessel at the flow rate of 1 liter/minute maintaining the inner temperature at 750 to 770 °C for about 15 minutes for carburizing.

After this carburized ternary platinum alloy catalyst was incorporated in a half fuel cell as a cathode of which an electrolyte was 100 percent hot phosphoric acid at a rate of 0.5 mg/cm$^2$ of platinum similarly to Example 1, its activity at 1atm., 190 °C and 900 mV of oxygen electrode was measured to be 48 mA/mg-Pt.

**Claims**

1. A platinum alloy catalyst comprising a carbon support and (a) platinum, (b) manganese and (c) at least one of nickel and cobalt supported on the carbon support.

2. The catalyst according to claim 1, wherein 40 to 90 atomic percent of the platinum, 30 to 5 atomic percent of the manganese and 30 to 5 atomic percent of at least one of the nickel and the cobalt are supported on the carbon support.

3. A process of preparing a platinum alloy catalyst which comprises impregnating a carbon support with a solution of a platinum-containing ion, depositing the platinum on the carbon support by reducing the platinum-containing ion by means of a reductant, applying a solution of an organic acid amine salt of manganese, and of at least one of nickel and cobalt to the carbon support, and alloying the these metals with the platinum on the carbon support.

4. The process according to claim 3, wherein the organic acid amine salt is a formic acid amine salt and/or an acetic acid amine salt.

5. The process according to claim 3, wherein the reductant is a thiosulfate and/or a metabisulfite.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 450 849 (JOHNSON MATTEY)<br>* claims 1-14 *<br>* examples 1-7 * | 1-3 | H01M4/92<br>B01J23/89 |
| Y | | 4 | |
| | --- | | |
| Y | EP-A-0 330 627 (TANAKA KIKINZOKU KOGYO)<br>* claims 1-6 * | 4 | |
| | --- | | |
| A | GB-A-2 242 203 (JOHNSON MATTEY) | | |
| | --- | | |
| A | US-A-4 937 220 (R. NICKOLS) | | |
| | ----- | | |

TECHNICAL FIELDS
SEARCHED (Int. Cl.5 )

H01M
B01J

The present search report has been drawn up for all claims

| Place of search | Date of completion of the search | Examiner |
|---|---|---|
| THE HAGUE | 21 SEPTEMBER 1992 | THION M.A. |